# EUROPEAN PATENT APPLICATION

(11) **EP 4 675 236 A1**
(43) Date of publication of application: **07.01.2026**
(21) Application number: 25179390.7
(22) Date of filing: 28.05.2025
(51) Int. Cl.: G01D 11/24, G01D 11/30

(54) **SENSOR HOUSING ASSEMBLY FOR MULTIPLE MOUNTING INTERFACES AND CONFIGURATIONS**

(30) Priority: 02.07.2024 US 202418762109
(71) Applicant: Honeywell International Inc., Charlotte, NC 28202 (US)
(72) Inventor: YEE, Daniel James, Charlotte, 28202 (US); CROSS, Karina E., Charlotte, 28202 (US); MORAN, Michael, Charlotte, 28202 (US); MYERS, Ronald W., Charlotte, 28202 (US)
(74) Representative: Haseltine Lake Kempner LLP

(57) **Abstract**

A sensor housing assembly comprising a body; and a flange comprising (i) a length that is perpendicular to the body, (ii) an overhang that comprises at least a majority of the length, wherein the overhang is configurable with a mount object, (iii) a plurality of mounting ribs that comprise raised surfaces with respect to a base surface of the flange, and (iv) a mounting aperture that allows passing of a fastener through the flange

## Description

### TECHNICAL FIELD

Various embodiments of the present disclosure relate to monitoring equipment, and more particularly to sensor device mounts.

### BACKGROUND

Sample sensors may be provided to customers for evaluation via demonstration kits. A demonstration kit may facilitate testing of one or more sensors by customers in a convenient manner by supplying the customers with software that allows the customer to test functionality of the sensor without needing to write or understand how to write software code to communicate with the sensor. As such, a demonstration kit may save the customer time and money on the software aspect of sensor evaluation. However, providing a convenient setup for physically mounting a sensor for testing is much more difficult. For example, a sensor may be utilized in multiple applications in a variety of different environments of which customers may want to test the sensor in. Given the wide variation of environments for testing, sensor manufacturers may provide either generic mounting mechanisms or no mounting mechanisms with their sensors, thus requiring customers to invest additional time and money to build fixtures in order to evaluate a sensor.

Applicant has identified many technical challenges and difficulties associated with conventional sensor housing assemblies.

### BRIEF SUMMARY

Various embodiments described herein relate to sensor housing assemblies for mounting with various mounting objects and/or configurations.

In accordance with various embodiments of the present disclosure, a sensor housing assembly is provided. In some embodiments, the sensor housing assembly comprises a body; and a flange comprising (i) a length that is perpendicular to the body, (ii) an overhang that comprises at least a majority of the length, wherein the overhang is configurable with a mount object, (iii) a plurality of mounting ribs that comprise raised surfaces with respect to a base surface of the flange, and (iv) a mounting aperture that allows passing of a fastener through the flange.

In some embodiments, the flange further comprises a pair of resting sides that comprises a respective pair of flat surface portions and shares a pair of respective planes with the body. In some embodiments, the sensor housing assembly further comprises a sensor interface. In some embodiments, the body comprises circuitry that is configured to provide a power or data interface with a sensor that is coupled to the sensor interface. In some embodiments, the plurality of mounting ribs comprises a plurality of respective distal surfaces that are angled or contoured. In some embodiments, the plurality of respective distal surfaces is adaptable to a plurality of mount object surfaces.

In some embodiments, the flange further comprises a raised mounting surface that is level with the plurality of mounting ribs. In some embodiments, one or more of the plurality of mounting ribs, the raised mounting surface, or the body provide anti-rotation with respect to mounting with the mounting aperture. In some embodiments, the mounting aperture is centered about the plurality of mounting ribs. In some embodiments, one or more of the plurality of mounting ribs, the raised mounting surface, or the body impedes rotation of the sensor housing assembly about the mounting aperture. In some embodiments, the fastener comprises a screw or bolt. In some embodiments, the mount object comprises a slotted frame or a pole. In some embodiments, the flange further comprises a pair of resting sides.

In some embodiments, the mount object comprises a plurality of sides and a plurality of respective cavities. In some embodiments, the sensor housing assembly is mounted to the mount object by engaging the plurality of mounting ribs with a given cavity of the plurality of respective cavities. In some embodiments, engaging the plurality of mounting ribs with the given cavity allows one or more surface portions of the mount object that are adjacent to the given cavity to be supported against at least a portion of the base surface and a sidewall of a raised mounting surface of the flange. In some embodiments, the flange further comprises a plurality of mounting slots that allow passing of a tie fastener through the flange. In some embodiments, the mount object comprises a flat surface. In some embodiments, (i) at least a portion of a first planar surface of the mount object is supported against the plurality of mounting ribs and (ii) at least a portion of a second planar surface of the mount object that is perpendicular to the first planar surface is supported against the body. In some embodiments, the mount object comprises a vise or a clamp, wherein the sensor housing assembly is mounted on the mount object by configuring the body or the flange between a pair of jaws of the vise or clamp.

The foregoing illustrative summary, as well as other exemplary objectives and/or advantages of the disclosure, and the manner in which the same are accomplished, are further explained in the following detailed description and its accompanying drawings.

### BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:
FIG. 1 provides a perspective view of a sensor housing assembly in accordance with some embodiments of the present disclosure;
FIG. 2 is a top partial view of a sensor housing assembly for slotted frame configurations in accordance with some embodiments of the present disclosure;
FIG. 3 is a perspective view of a sensor housing assembly for slotted frame configurations in accordance with some embodiments of the present disclosure;
FIG. 4 is a perspective view of a sensor housing assembly for single fastener slotted frame configurations in accordance with some embodiments of the present disclosure;
FIG. 5 is perspective view of a sensor housing assembly for dual fastener capable slotted frame configurations in accordance with some embodiments of the present disclosure;
FIG. 6 is a top partial view of a sensor housing assembly for pole configurations in accordance with some embodiments of the present disclosure;
FIG. 7 is a perspective view of a sensor housing assembly for dual fastener capable pole configurations in accordance with some embodiments of the present disclosure;
FIG. 8 is a top partial view of a sensor housing assembly for flat surface edge configurations in accordance with some embodiments of the present disclosure;
FIG. 9 is a perspective view of a sensor housing assembly for self-supporting configurations in accordance with some embodiments of the present disclosure; and
FIG. 10 is a perspective view of a sensor housing assembly for clamp or vise configurations in accordance with some embodiments of the present disclosure.

### DETAILED DESCRIPTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," etc., are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

As described above, there are many technical challenges and difficulties associated with conventional sensor housing assemblies. Providing sensors that are easily adaptable to a variety of configurations may ease engineering hurdles needed for testing sensor equipment. As such, there is a need for facilitating mounting of sensors to a variety of fixtures or features in a manner that is convenient for end users (e.g., potential customers) to perform testing on the sensors.

Various example embodiments of the present disclosure overcome such technical challenges and difficulties in sensor housing assemblies and provide various technical advancements and improvements. In accordance with various embodiments of the present disclosure, example sensor housing assembly components and features for improved mounting capabilities are disclosed. In some embodiments, a sensor housing assembly may provide adaptability to multiple mounting conditions of various testing environments, such as testing or engineering laboratories. In some embodiments, a sensor housing assembly comprises a plurality of mounting features that provide a plurality of anti-rotation and/or support functionalities for a plurality of respective mounting conditions. In some embodiments, a sensor housing assembly may be mounted with one of a plurality of fasteners that is associated with one or more mounting conditions.

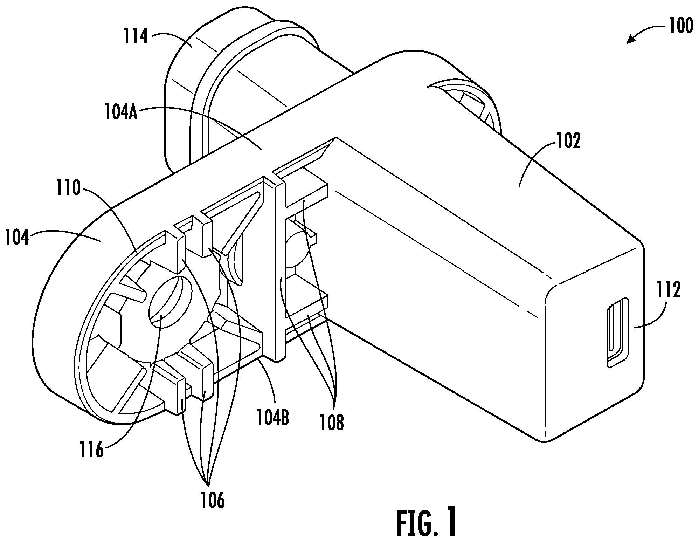

FIG. 1 provides a perspective view of a sensor housing assembly 100 in accordance with some embodiments of the present disclosure. The sensor housing assembly 100 comprises a body 102, a flange 104, and a sensor interface 114. As depicted in FIG. 1, the body 102 comprises at least one flat surface that may be suitable for resting on a level surface, such as a table, shelf, or platform. The body 102 is not limited to the shape(s) as depicted in the illustrated embodiments, and may comprise any shape (e.g., rectangular, prism, stadium, etc.). The flange 104 comprises (i) a length that is perpendicular to the body 102 and (ii) an overhang that comprises at least a majority of the length of the flange 104. In some embodiments, the overhang of the flange 104 be configured with (e.g., affixed, attached, or secured to) a mount object. The flange 104 further comprises resting sides 104A and 104B that may be suitable in conjunction with the body 102 for resting on a flat surface. The resting sides 104A and 104B comprise flat surface portions that share respective planes with the body 102.

In some embodiments, the body 102 comprises circuitry, such as a printed circuit board, that is configured to provide a power and/or data interface with a sensor connected to the sensor interface 114. In some embodiments, the body 102 comprises a processor, a memory device, and one or more communication interfaces, where the processor may be configured to: (i) receive input data from a given sensor that is connected to the sensor interface 114, (ii) process the data, and (iii) provide output data to a client or display device via sensor interface 112. In some other embodiments, the body 102 comprises circuitry (e.g., a processor) that is configured to (i) identify a sensor that is coupled to the sensor interface 112 by determining a serial number or identifier of the sensor, (ii) receive raw data from the sensor, (iii) determine one or more measurement values by processing the raw data based on the identification of the sensor (e.g., by applying one or more transfer function coefficients that are associated with the serial number or identifier of the sensor) and/or converting an analog signal to digital signal, and (iv) provide the one or more measurement values to a client or display device via a network interface (e.g., wired or wireless).

As will be understood, the processor may be embodied in a number of different ways. For example, that processor may be embodied as a complex programmable logic device (CPLD), microprocessor, multi-core processor, coprocessing entity, application-specific instruction-set processor (ASIP), microcontroller, and/or controller. Further, the processor may be embodied as one or more other processing devices or circuitry. The term circuitry may refer to an entirely hardware embodiment or a combination of hardware and computer program products. Thus, the processor may be embodied as an integrated circuit, application specific integrated circuit (ASICs), field programmable gate array (FPGAs), programmable logic array (PLA), hardware accelerator, other circuitry, and/or the like.

As depicted in FIG. 1, the flange 104 further comprises a plurality (four) of mounting ribs 106 and a raised mounting surface 108 that are on a mounting side of the flange 104. The plurality of mounting ribs 106 and the raised mounting surface 108 may provide contact and/or support surfaces with a mount object. The plurality of mounting ribs 106 comprise raised surfaces with respect to a flange base surface 110. The plurality of mounting ribs 106 comprises a first pair of mounting ribs that are adjacent to the resting side 104A and a second pair of mounting ribs that are adjacent to the resting side 104B. In some embodiments, the plurality of mounting ribs 106 comprise distal surfaces that are angled or contoured. According to various embodiments of the present disclosure, the distal surfaces of the plurality of mounting ribs 106 may be adaptable to a plurality of mount object surfaces. For example, a rounded mount object or a flat mount object may be supported against the angled or contour distal surfaces of the plurality of mounting ribs 106.

The raised mounting surface 108 comprises a raised flat surface with respect to the flange base surface 110. In some embodiments, the raised mounting surface 108 is level with the plurality of mounting ribs 106. In some embodiments, the raised mounting surface 108 may be configured as an additional contact surface for mounting with a mount object in certain configurations, such as with an elongated flat surface. In some embodiments, any of the plurality of mounting ribs 106, raised mounting surface 108, or flange base surface 110 may comprise padded portions for interfacing with mount object surfaces.

The flange 104 further comprises a mounting aperture 116 that may be used to secure the sensor housing assembly 100 to a mount object by passing a fastener, such as a screw, bolt, rivet, or tie, through the mounting aperture 116 and into the mount object. The mounting aperture 116 is centered about the plurality of mounting ribs 106. According to various embodiments, the plurality of mounting ribs 106, the raised mounting surface 108, or the body 102 may provide anti-rotation features to support mounting with the mounting aperture 116. That is, by mounting the sensor housing assembly 100 to a mount object via a fastener through the mounting aperture 116, a pivoting axis may be created at the mounting aperture 116. Accordingly, the plurality of mounting ribs 106, the raised mounting surface 108, or the body 102 may impede or obstruct rotation of the sensor housing assembly 100 about the mounting aperture 116.

In some embodiments, the sensor housing assembly 100 may be mounted to a plurality of mount object types. For example, the sensor housing assembly 100 may be mounted onto a T-slot frame, a pole, or an edge of a flat surface. The flange 104 further comprises resting sides 104A and 104B. In some embodiments, the body 102 and the resting sides 104A and 104B provide self-standing geometry that allows for the sensor housing assembly 100 to be configured on a surface without mounting. In some other embodiments, the sensor housing assembly 100 may be clamped to a flat surface at either the body 102 or at the mounting side of the flange 104.

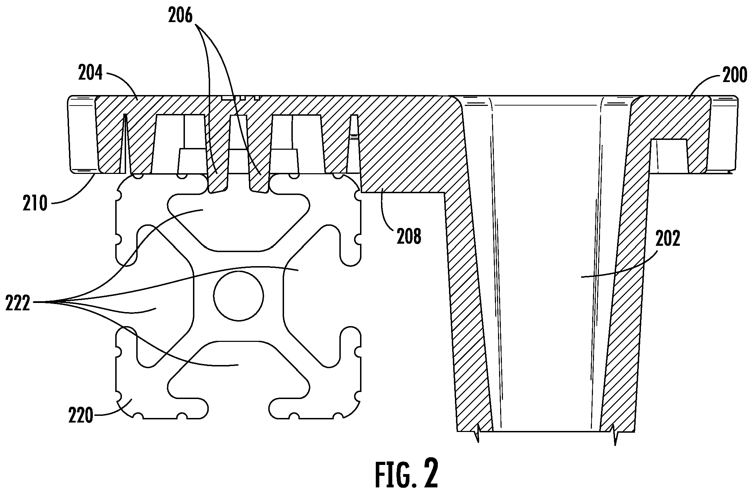

FIG. 2 is a top partial view of a sensor housing assembly 200 for slotted frame configurations in accordance with some embodiments of the present disclosure. The sensor housing assembly 200 is an example of the sensor housing assembly 100 of FIG. 1. The sensor housing assembly 200 comprises a body 202 and a flange 204. As depicted in FIG. 2, the sensor housing assembly 200 may be mounted to a mount object 220 at the flange 204. The flange 204 comprises a plurality of mounting ribs 206. The plurality of mounting ribs 206 comprise raised distal surfaces with respect to a flange base surface 210.

The mount object 220 comprises a plurality of sides and respective cavities 222 that may be engaged with the plurality of mounting ribs 206 to set the sensor housing assembly 200 on the mount object 220. For example, engaging the plurality of mounting ribs 206 with one of the plurality of cavities 222 allows surface portions of the mount object 220 that are adjacent to the engaged one of the cavities 222 to be supported against at least a portion of the flange base surface 210 and a sidewall of a raised mounting surface 208. In some embodiments, the mount object 220 may comprise a T-slot frame or any rail structure that comprises one or more cavities that may be mated with the plurality of mounting ribs 206.

In some embodiments, engaging the plurality of mounting ribs 206 with one of the plurality of cavities 222 also provides an anti-rotation feature by resisting torsion on the plurality of mounting ribs 206 that may be caused by rotating the mount object 220 about the sensor housing assembly 200, or vice versa. Additionally, the raised mounting surface 208 may also prevent or resist rotation of the mount object 220 about the sensor housing assembly 200 by obstructing a rotational path that may be taken by the mount object 220 on the flange 104.

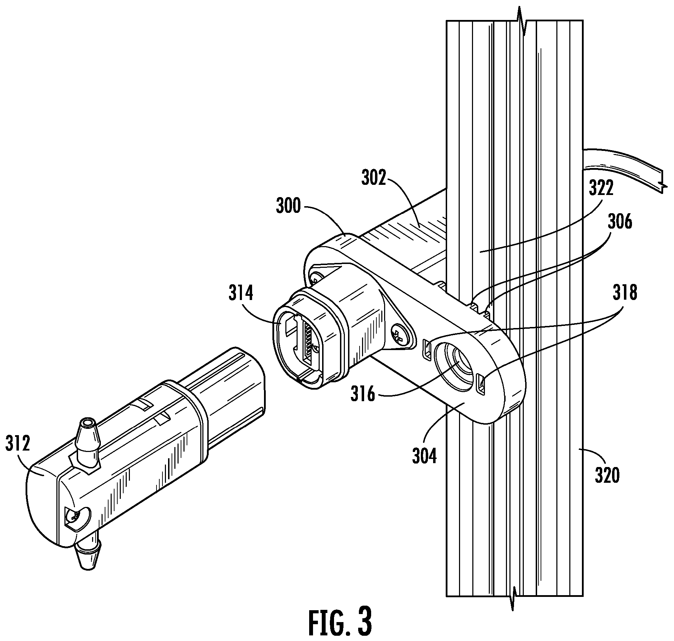

FIG. 3 is a perspective view of a sensor housing assembly 300 for slotted frame configurations in accordance with some embodiments of the present disclosure. The sensor housing assembly 300 comprises a body 302, a flange 304, and a sensor interface 314. In some embodiments, the body 302 comprises circuitry that is configured to perform one or more functions with respect to a sensor 312 that is connected to the sensor interface 314. For example, the sensor 312 may be configured to measure flow rate or temperature of fluids.

The flange 304 comprises (i) a length that is perpendicular to the body 302 and (ii) an overhang that comprises at least a majority of the length of the flange 304. The sensor housing assembly 300 may be mounted on a mount object 320 at the flange 304. In some embodiments, the sensor housing assembly 300 may comprise at least one indicator, such as an arrow or text, that is associated with a proper mounting orientation of the sensor housing assembly 300. In some embodiments, the sensor 312 may require a specific mounting orientation to operate correctly. For example, the sensor 312 may comprise a liquid flow sensor that is required to be installed vertically such that liquid may flow upwards through the sensor 312. Accordingly, an indicator may simplify mounting of the sensor housing assembly 300 to a mount object 320 as well as ensure that the sensor housing assembly 300 is oriented correctly.

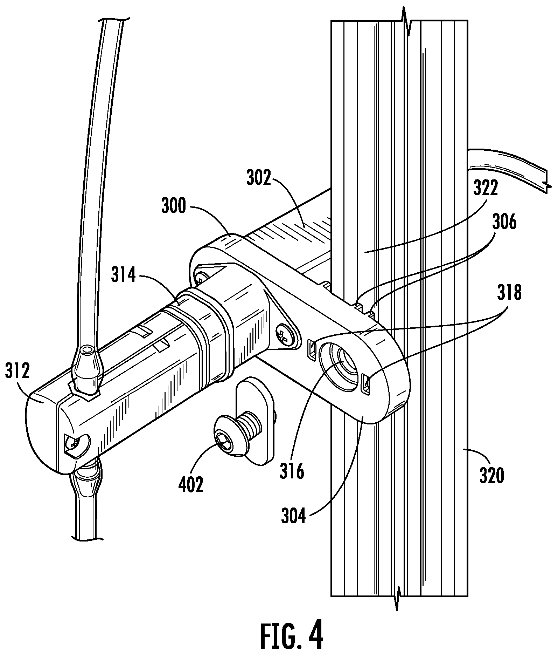

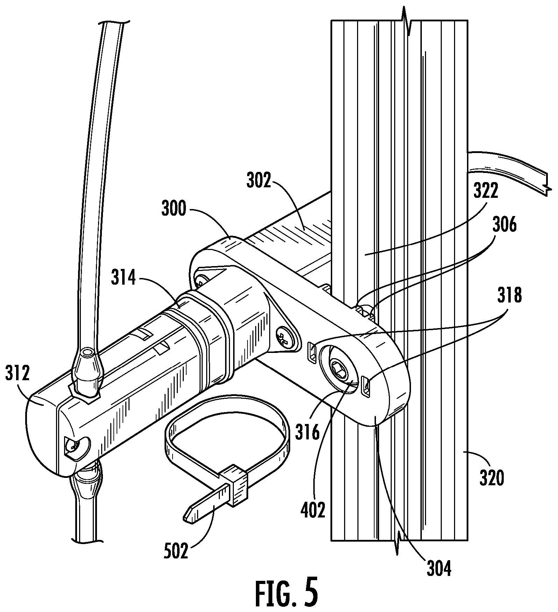

The flange 304 comprises a plurality of mounting ribs 306 that is engaged with a cavity 322 of the mount object 320 to set the flange 304 on the mount object 320. The plurality of mounting ribs 306 may prevent or resist rotation of the sensor housing assembly 300 when mounted to the mount object 320. Additionally, the flange 304 may be secured to the mount object 320 by attaching a fastener through a mounting aperture 316 and/or mounting slots 318, respectively, to provide fixedness (e.g., resist linear and/or rotational movement) of the sensor housing assembly 300 when mounted to the mount object 320), which is described in further detail with reference to the description of FIG. 4 and FIG. 5.

FIG. 4 is a perspective view of the sensor housing assembly 300 for single fastener slotted frame configurations in accordance with some embodiments of the present disclosure. The sensor housing assembly 300 may be mounted on a mount object 320 by securing the flange 304 to the mount object 320. In some embodiments, a fastener 402 may be inserted through the mounting aperture 316 and into or through the mount object 320. Accordingly, the fastener 402 may prevent or resist the sensor housing assembly 300 from detaching from the mount object 320 as well as prevent or resist linear (e.g., horizontal or vertical) movement of the sensor housing assembly 300 when mounted on the mount object 320.

FIG. 5 is perspective view of the sensor housing assembly 300 for dual fastener capable slotted frame configurations in accordance with some embodiments of the present disclosure. As depicted in FIG. 5, the flange 304 is secured to the mount object 320 with a fastener 402. Additionally, or alternatively, the sensor housing assembly 300 may be secured to the mount object 320 with a tie fastener 502. In some embodiments, the tie fastener 502 may be inserted through the mounting slots 318 and form a loop around the mounting slots 318 and at least a portion of the mount object 320. In some embodiments, the tie fastener 502 comprises a cable tie, wire, or line. Accordingly, the tie fastener 502 may prevent the sensor housing assembly 300 from detaching from the mount object 320 and prevent/resist linear and/or rotational movement of the sensor housing assembly 300 when mounted on the mount object 320.

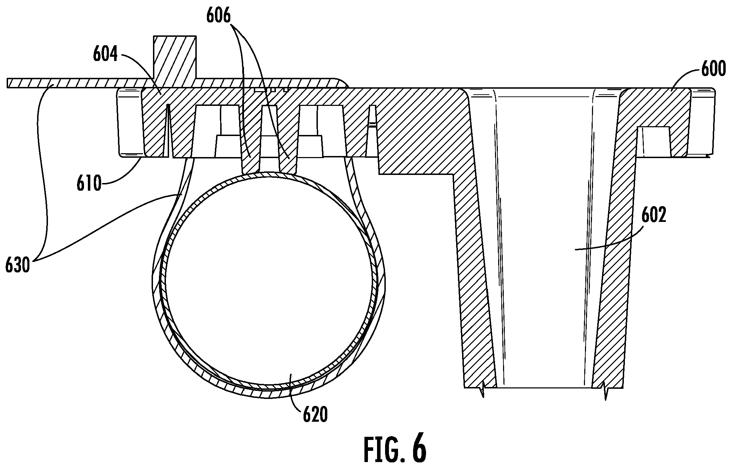

FIG. 6 is a top partial view of a sensor housing assembly 600 for pole configurations in accordance with some embodiments of the present disclosure. The sensor housing assembly 600 is an example of the sensor housing assembly 100 of FIG. 1. The sensor housing assembly 600 comprises a body 602 and a flange 604. As depicted in FIG. 6, the sensor housing assembly 600 is mounted to a mount object 620 at the flange 604. The mount object 620 comprises a cylindrical support object, such as a pole. The flange 604 is mounted to the mount object 620 by securing the flange 604 to the mount object 620 with a tie fastener 630. For example, a loop may be formed with the tie fastener 630 by threading the tie fastener 630 through the flange 604 and around the mount object 620.

The flange 604 comprises a plurality of mounting ribs 606. The plurality of mounting ribs 606 comprise raised distal surfaces with respect to a flange base surface 610. According to various embodiments, securing the flange 604 to the mount object 620 comprises supporting at least a portion of an outer surface of the mount object 620 against the raised distal surfaces of the plurality of mounting ribs 606. That is, the outer surface of the mount object 620 may be configured in aligned contact (either directly, or indirectly if the plurality of mounting ribs 606 is padded) with the raised distal surfaces of the plurality of mounting ribs 606. In some embodiments, the raised distal surfaces of the plurality of mounting ribs 606 comprise inwardly angled or concave contoured surfaces that conform with or accommodate an outwardly rounded surface, such as the outer surface of the mount object 620. In some embodiments, the outwardly rounded surface of the mount object 620 is supported against the raised distal surfaces of the plurality of mounting ribs 606 and provides an anti-rotation feature by resisting torsion on the plurality of mounting ribs 606 that may be caused by rotating the mount object 620 about the sensor housing assembly 600.

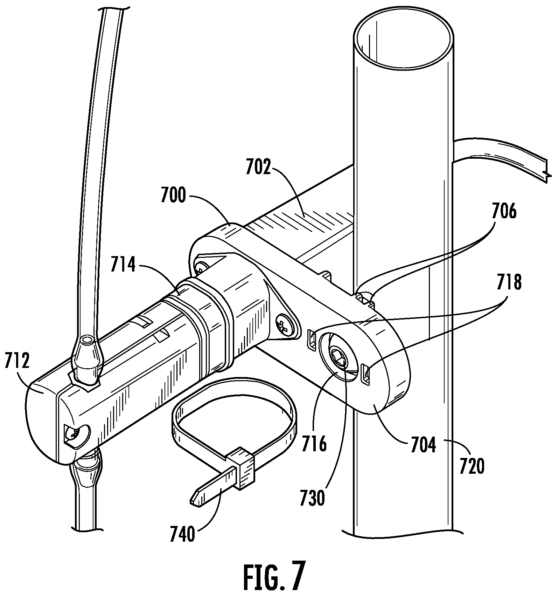

FIG. 7 is a perspective view of a sensor housing assembly 700 for dual fastener capable pole configurations in accordance with some embodiments of the present disclosure. The sensor housing assembly 700 comprises a body 702, a flange 704, and a sensor interface 714. In some embodiments, the body 702 comprises circuitry that is configured to perform one or more functions with respect to a sensor 712 that is connected to the sensor interface 714. For example, the sensor 712 may be configured to measure flow rate or temperature of fluids.

In some embodiments, the sensor housing assembly 700 may comprise at least one indicator, such as an arrow or text, that is associated with a proper mounting orientation of the sensor housing assembly 700. In some embodiments, the sensor 712 may require a specific mounting orientation to operate correctly. For example, the sensor 712 may comprise a liquid flow sensor that is required to be installed vertically such that liquid may flow upwards through the sensor 712. Accordingly, an indicator may simplify mounting of the sensor housing assembly 700 to a mount object 720 as well as ensure that the sensor housing assembly 700 is oriented correctly.

The flange 704 comprises (i) a length that is perpendicular to the body 702 and (ii) an overhang that comprises at least a majority of the length of the flange 704. As depicted in FIG. 7, the sensor housing assembly 700 is mounted on a mount object 720 at the flange 704. The flange 704 may be secured to the mount object 720 by attaching a fastener 730 or tie fastener 740 through the mounting aperture 716 and/or the mounting slots 718, respectively, to provide fixedness (e.g., resist linear and/or rotational movement) of the sensor housing assembly 700 when mounted to the mount object 720. The flange 704 further comprises a plurality of mounting ribs 706 that may be placed in contact with the mount object 720 to support the mount object 720 against the flange 704. The plurality of mounting ribs 706 may prevent or resist rotation of the sensor housing assembly 700 when mounted to the mount object 720.

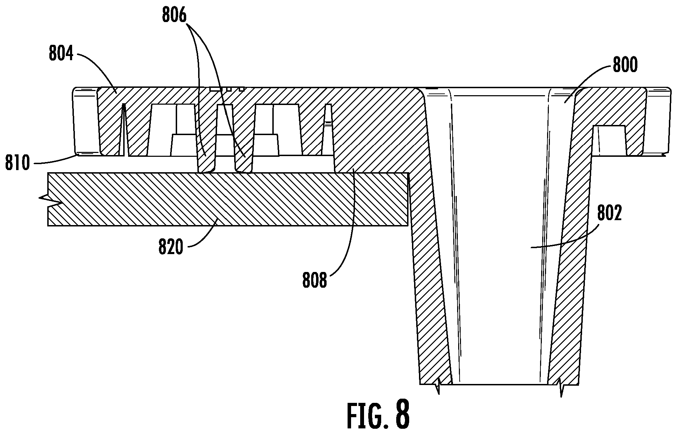

FIG. 8 is a top partial view of a sensor housing assembly 800 for flat surface edge configurations in accordance with some embodiments of the present disclosure. The sensor housing assembly 800 is an example of the sensor housing assembly 100 of FIG. 1. The sensor housing assembly 800 comprises a body 802 and a flange 804. As depicted in FIG. 8, the sensor housing assembly 800 is mounted to a mount object 820 at the flange 804. According to various embodiments of the present disclosure, the flange 804 may be mounted to the mount object 820 by securing the flange 804 to the mount object 820 with a fastener or a clamp/vise.

The mount object 820 comprises an edge of a flat surface, such as a table or flat panel. The flange 804 comprises a plurality of mounting ribs 806. The plurality of mounting ribs 806 comprise raised distal surfaces with respect to a flange base surface 810. FIG. 8 further depicts (i) at least a portion of a first planar surface of the mount object 820 is supported against the raised distal surfaces of the plurality of mounting ribs 806 and the raised mounting surface 808 and (ii) at least a portion of a second planar surface of the mount object 820 that is perpendicular to the first planar surface is supported against the body 802. As such, at least portions of the first and second planar surfaces of the mount object 820 may be configured in aligned contact (either directly, or indirectly if the plurality of mounting ribs 806 is padded) with raised distal surfaces of the plurality of mounting ribs 806. According to various embodiments of the present disclosure, maintaining support of at least portions of the first and second planar surfaces on the plurality of mounting ribs 806, the raised mounting surface 808, and the body 802 prevents or resists rotation on a plane of the flange base surface 810.

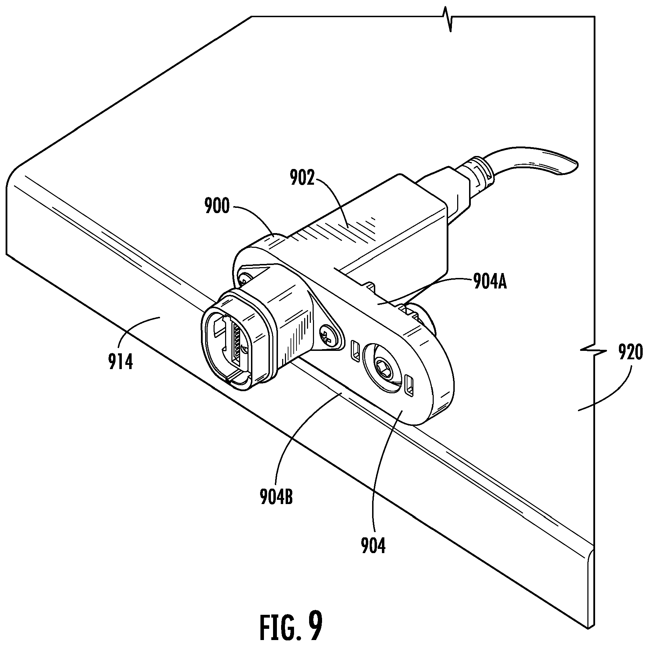

FIG. 9 is a perspective view of a sensor housing assembly 900 for self-supporting configurations in accordance with some embodiments of the present disclosure. The sensor housing assembly 900 comprises a body 902, a flange 904, and a sensor interface 914. In some embodiments, the body 902 comprises circuitry that is configured to perform one or more functions with respect to a sensor that is connected to the sensor interface 914. In some embodiments, the sensor housing assembly 900 may comprise at least one indicator, such as an arrow or text, that is associated with a proper orientation of the sensor housing assembly 900. The indicator may ensure that if a sensor is coupled to the sensor interface 914, the sensor will be in a proper orientation.

The flange 904 comprises (i) a length that is perpendicular to the body 902 and (ii) an overhang that comprises at least a majority of the length of the flange 904. As depicted in FIG. 9, the sensor housing assembly 900 may be rested on a support object 920. The body 902 comprises at least one flat surface that is suitable for resting on the support object 920. The body 902 is not limited to the shape depicted in FIG. 9 and may comprise any shape (e.g., rectangular, prism, stadium, etc.). The flange 904 further comprises resting sides 904A and 904B that may be suitable in conjunction with the body 902 for resting on the support object 920. The resting sides 904A and 904B comprise flat surface portions that share respective planes with the body 902.

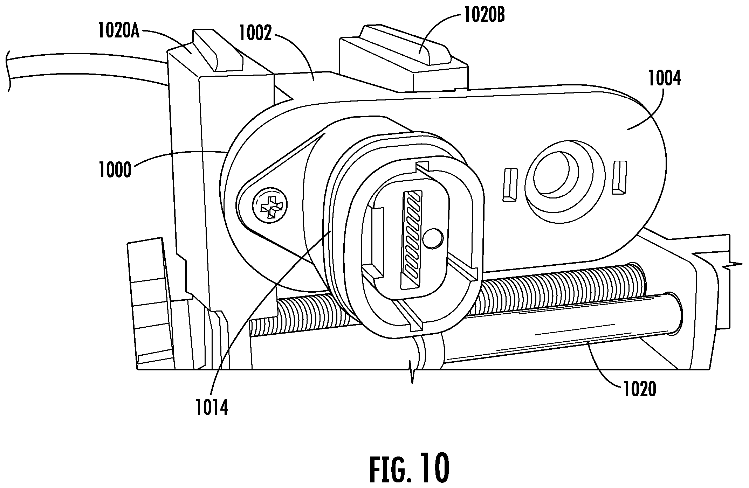

FIG. 10 is a perspective view of a sensor housing assembly 1000 for clamp or vise configurations in accordance with some embodiments of the present disclosure. The sensor housing assembly 1000 comprises a body 1002, a flange 1004, and a sensor interface 1014. In some embodiments, the body 1002 comprises circuitry that is configured to perform one or more functions with respect to a sensor that is connected to the sensor interface 1014. In some embodiments, the sensor housing assembly 1000 may comprise at least one indicator, such as an arrow or text, that is associated with a proper mounting orientation of the sensor housing assembly 1000. The indicator may ensure that if a sensor is coupled to the sensor interface 1014, the sensor will be in a proper orientation.

The flange 1004 comprises (i) a length that is perpendicular to the body 1002 and (ii) an overhang that comprises at least a majority of the length of the flange 1004. The body 1002 comprises flat sidewalls or a shape that is suitable of being held in a vise (e.g., vise 1020) or clamp. As depicted in FIG. 10, the sensor housing assembly 1000 is mounted on a vise 1020 by configuring the body 1002 between jaws 1020A and 1020B of the vise 1020. In some alternative embodiments, the sensor housing assembly 1000 is mounted by configuring the flange 1004 between jaws 1020A and 1020B.

It is to be understood that the disclosure is not to be limited to the specific embodiments disclosed, and that modifications and other embodiments are intended to be included within the scope of the appended claims. Although specific terms are employed herein, they are used in a generic and descriptive sense only and not for purposes of limitation, unless described otherwise.

## Claims

1. A sensor housing assembly comprising:
a body; and
a flange comprising (i) a length that is perpendicular to the body, (ii) an overhang that comprises at least a majority of the length, wherein the overhang is configurable with a mount object, (iii) a plurality of mounting ribs that comprise raised surfaces with respect to a base surface of the flange, (iv) a mounting aperture that allows passing of a fastener through the flange, and (v) a pair of resting sides that comprises a respective pair of flat surface portions and shares a pair of respective planes with the body.

2. The sensor housing assembly of claim 1 further comprising a sensor interface.

3. The sensor housing assembly of claim 2, wherein the body comprises circuitry that is configured to provide a power or data interface with a sensor that is coupled to the sensor interface.

4. The sensor housing assembly of claim 1, wherein the plurality of mounting ribs comprises a plurality of respective distal surfaces that are angled or contoured.

5. The sensor housing assembly of claim 4, wherein the plurality of respective distal surfaces is adaptable to a plurality of mount object surfaces.

6. The sensor housing assembly of claim 1, wherein the flange further comprises a raised mounting surface that is level with the plurality of mounting ribs.

7. The sensor housing assembly of claim 6, wherein one or more of the plurality of mounting ribs, the raised mounting surface, or the body impedes rotation with respect to mounting with the mounting aperture.

8. The sensor housing assembly of claim 7, wherein the mounting aperture is centered about the plurality of mounting ribs.

9. The sensor housing assembly of claim 8, wherein one or more of the plurality of mounting ribs, the raised mounting surface, or the body impedes rotation of the sensor housing assembly about the mounting aperture.

10. The sensor housing assembly of claim 1, wherein the sensor housing assembly is mounted to the mount object by engaging the plurality of mounting ribs with a cavity of a plurality of cavities.

11. The sensor housing assembly of claim 10, wherein engaging the plurality of mounting ribs with the cavity allows one or more surface portions of the mount object that are adjacent to the cavity to be supported against at least a portion of the base surface and a sidewall of a raised mounting surface of the flange.

12. The sensor housing assembly of claim 1, wherein the flange further comprises a plurality of mounting slots that allow passing of a tie fastener through the flange.

13. The sensor housing assembly of claim 1, wherein the mount object comprises a flat surface.

14. The sensor housing assembly of claim 13, wherein (i) at least a portion of a first planar surface of the mount object is supported against the plurality of mounting ribs and (ii) at least a portion of a second planar surface of the mount object that is perpendicular to the first planar surface is supported against the body.

15. The sensor housing assembly of claim 1, wherein the mount object comprises a vise or a clamp, wherein the sensor housing assembly is mounted on the mount object by configuring the body or the flange between a pair of jaws of the vise or clamp.
